(19) Europäisches Patentamt
European Patent Office
Office européen des brevets

(11) Publication number: 0 391 581 A2

(12) # EUROPEAN PATENT APPLICATION

(21) Application number: 90303118.5

(51) Int. Cl.[5]: B32B 7/10, B32B 27/12

(22) Date of filing: 23.03.90

(30) Priority: 03.04.89 GB 8907469

(43) Date of publication of application: 10.10.90 Bulletin 90/41

(84) Designated Contracting States: AT BE CH DE DK ES FR GB IT LI LU NL SE

(71) Applicant: IMPERIAL CHEMICAL INDUSTRIES PLC
Imperial Chemical House, Millbank
London SW1P 3JF(GB)

(72) Inventor: Donoghue, Anthony
37 Tower Green, St Hilda's
Middlesbrough, Cleveland(GB)
Inventor: McGrail, Patrick Terence
Whitehall Farm, Mickleby
Saltburn, Cleveland(GB)
Inventor: Sefton, Mark Stephen
Ballinahoun, East Harlsey
Northallerton, North Yorkshire(GB)

(74) Representative: Chapman, Kenneth Hazel et al
Imperial Chemical Industries PLC Legal
Department: Patents P.O. Box 6 Bessemer
Road
Welwyn Garden City Herts, AL71HD(GB)

(54) **Composite structure.**

(57) A composite structure comprising:

(a) at least one layer comprising at least one uncured or partly cured thermoset resin precursor;

(b) in contact therewith, at least one layer comprising at least one amorphous thermoplast, said precursor and said amorphous thermoplast having mutual solubility at a temperature between ambient and thermoset cure temperature; and

(c) reinforcing fibre present in either or both of said layers and/or between them. The relative thicknesses of layers (a) and (b) are preferably such that, on curing or further curing, layer (b) merges sufficiently into layer (a) to leave distinguishable thermoplast under 5% of total initial thickness. The thermoplast is preferably a polyarylether containing sulphone groups in its chain.

EP 0 391 581 A2

## Composite Structure

THIS INVENTION relates to a composite structure comprising a thermoset component, a thermoplast component and fibre reinforcement, and to a method of making it.

In our copending GB application 8723291 to be published as European application 311349 we described such a combination of components in broad detail. We have now found that these components can be brought together in a different way so as to provide advantages in choice of material and control of processing.

According to the invention a composite structure comprises

(a) at least one layer comprising at least one uncured or partly cured thermoset resin precursor;

(b) in contact therewith, at least one layer comprising at least one amorphous thermoplast

said precursor and said amorphous thermoplast having mutual solubility at a temperature between ambient and thermoset cure temperature; and

(c) reinforcing fibre present in either or both of said layers and/or between them.

Such a structure is a precursor of a load-bearing structure and can be shaped appropriately and then cured to develop mechanical strength.

The relative thickness of layers (a) and (b) is preferably such that on curing or further curing, layer (b) substantially merges into the resin of layer (a), thus giving a toughened thermoset matrix in the interlaminar region. There may be a gradation of matrix composition and/or morphology but preferably the merging is sufficient to leave substantially no (ie under 5% of total thickness) distinguishable thermoplast layer free of thermoset. Preferably layer (a) contains substantially all the fibre required to reinforce the whole structure. The layers can be continuous or capable of becoming continuous on curing; in particular layer (b) can be in the form of powder and/or fibres fine enough to permit dissolution in the thermoset precursor. Typically the amorphous thermoplast is present at 3-15, especially 5-10 weight percent on the total of thermoset precursor and reinforcing fibres.

The thermoplast can be for example a polyarylether or polyimide or polyetherimide. Very suitably such a polyarylether contains also sulphone groups in its chain, especially as ether-linked repeating units of formula $(PhSO_2Ph)_n$ where n is 1 or 2 and may be fractional and Ph is phenylene, especially paraphenylene. Such a polyarylsulphone preferably contains also units $(Ph)_a$ so linked, where a is 1 to 3 and can be fractional and groups Ph are (when a exceeds 1) linked linearly through a single chemical bond or a divalent group other than $SO_2$ (especially oxygen or lower alkylene) or are fused together. By "fractional" reference is made to the average value for a given polymer chain containing units having various values of n or a. Relative proportion of the said repeating units is such that on average at least two units $(PhSO_2Ph)_n$ are in immediate mutual succession in each polymer chain present and is preferably in the range 1:99 to 99:1, especially 10:90 to 90:10, respectively. Typically the ratio is in the range 25-50 $(Ph)_a$, balance $(PhSO_2Ph)_n$. In preferred polyarylsulphones a = 1 and the units are

I X Ph $SO_2$ Ph X Ph $SO_2$ Ph ("PES"); and

II X $Ph_a$ X Ph $SO_2$ Ph ("PEES") where X is O or S and may differ from unit to unit; the ratio of I to II (respectively) preferably between 10:90 and 80:20 especially between 10:90 and 55:45.

The preferred relative proportions of the repeating units of the polyarylsulphone may be expressed in terms of the weight percent $SO_2$ content, defined as 100 times (weight of $SO_2$)/(weight of average repeat unit). The preferred $SO_2$ content is at least 22, preferably 23 to 25%. When a = 1 this corresponds to PES/PEES ratios of at least 20:80, preferably in the range 35:65 to 65:35. These proportions favourably affect the morphology of the resin/polymer combination as will be described below. However, the advantageous co-continuous morphology appears to depend less on $SO_2$ content than in the volume-mixed thermoset/thermoplast compositions described in our co-pending application.

The above proportions refer only to the unit mentioned. In addition to such units the polyarylsulphone may contain up to 50 especially up to 25% molar of other repeating units: the preferred $SO_2$ content ranges (if used) then apply to the whole polymer. Such units may be for example of the formula

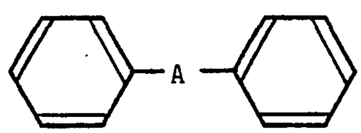

in which A is a direct link, oxygen, sulphur, -CO- or a divalent hydrocarbon radical. When the polyarylsulphone is the product of nucleophilic synthesis, its units may have been derived for example from one or more the following bisphenols and/or corresponding bis-thiols or phenol - thiols:
hydroquinone
4,4′ - dihydroxybiphenyl
resorcinol
dihydroxynaphthalene (2,6 and other isomers)
4,4′ - dihydroxydiphenyl ether or -thioether
4,4′ - dihydroxybenzophenone
2,2′ - di - (4-hydroxyphenyl)- propane or -methane.

If a bis-thiol is used, it may be formed in situ, that is, a dihalide as described for example below may be reacted with an alkali sulphide or polysulphide or thiosulphate.

Other examples of such additional units are of the formula

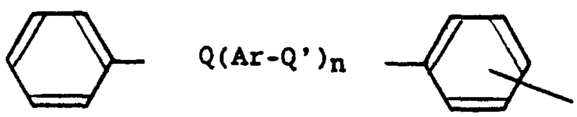

in which Q and Q′, which may be the same or different, are CO or $SO_2$; Ar is a divalent aromatic radical; and n is 0, 1, 2, or 3, provided that n is not zero where Q is $SO_2$. Ar is preferably at least one divalent aromatic radical selected from phenylene, biphenylene or terphenylene. Particular units have the formula

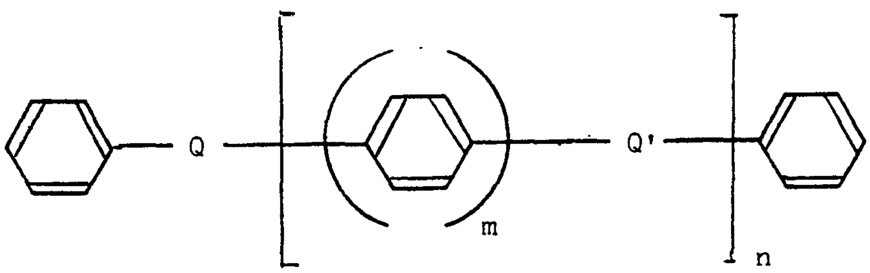

where m is 1, 2 or 3. When the polymer is the product of nucleophilic synthesis, such units may have been derived from one or more dihalides, for example:
4,4′ - dihalobenzophenone
4,4′- bis-(4-chlorophenylsulphonyl)biphenyl
1, 4 bis-(4-halobenzoyl)benzene
4,4′-bis-(4-halobenzoyl)biphenyl

They may of course have been derived partly from the corresponding bisphenols.

Whereas the thermoplast is amorphous when the structure is assembled, it may be of a type that crystallises on annealing, for example during heating to cure the thermoset precursor.

The polyarylsulphone may be the product of nucleophilic synthesis from halophenols and/or halothiophenols. In any nucleophilic synthesis the halogen if chlorine or bromine may be activated by the presence of a copper catalyst. Such activation is often unnecessary if the halogen is activated by an electron withdrawing group. In any event fluoride is usually more active than chloride. Any nucleophilic synthesis of the polyarylsulphone is carried out preferably in presence of one or more alkali metal carbonates in up to 10% molar excess over the stoichiometric and of an aromatic sulphone solvent, at a temperature in the range 150-350|C.

If desired, the polyarylsulphone may be the product of electrophilic synthesis.

The number average molecular weight of the polyarylsulphone is suitably in the range 2000 to 100000. Preferably it is over 9000 especially over 10000 and structurally as well as by chemical interaction increases toughness by comparison with that of the thermoset resin alone by providing zones of the tough thermoplast between cross-linked thermoset zones. By bringing the thermoset and thermoplast together as layers, it becomes convenient to use thermoplasts of higher molecular weight (for example over 25000), and consequently of greater potential toughening effect, than in the compositions of our co-pending application. Another useful sub-range is 3000-9000 in which it acts more as a chain-extender for the thermoset resin,

separating and diluting local cross-link zones and thus toughening the structure. Within the above definition of the polyarylsulphone those are preferably chosen which are miscible with suitable epoxy resin precursors, have high modulus and Tg and are tough.

It is convenient to use reduced viscosity (RV), measured on a solution of 1g of polymer in 100 ml of solution in dimethyl formamide at 25° C as an indication of molecular weight, the correlation being as follows:

| RV | 0.15 | 0.25 | 0.45 | 0.92 |
|---|---|---|---|---|
| MW (number average) | 5000 | 13000 | 20000 | 60000 |

(Such molecular weights were in fact measured by vapour phase osmometry and are of course subject to the usual error range of about 10%).

The polyarylsulphone preferably contains end groups and/or pendant groups of formula -A′-Y where A′ is a divalent hydrocarbon group, preferably aromatic, and Y is a group reactive with the thermoset precursor or with a curing agent or with like groups on other polymer molecules. Examples of Y are groups providing active hydrogen especially OH, $NH_2$, NHR or -SH, where R is a hydrocarbon group containing up to 8 carbon atoms, or providing other cross-linking reactivity especially epoxy, cyanate, isocyanate, acetylene or ethylene, as in vinyl, allyl or maleimide. Preferably at least 50% of the group Y of the polysulphone are $NH_2$.

In preferred forms the structure has the capacity to form chemical bonds bridging the interface between a thermoset resin phase and a polyarylsulphone phase. As a result of the fineness of the mutual dispersion of the two phases, the solubility or swellability of the thermoplast is substantially less than if the thermoset resin were not present. This is so even if the thermoplast is of molecular weight over 10000 or if it is halogen-ended, so that insolubilisation by reaction of end-group with thermoset precursor is limited, if present at all, but is more pronounced when the thermoplast carries thermoset-reactive groups.

The thermoset precursor can be for example one or more of the following:
addition-polymerisable resins such as acrylics, vinyls, bismaleimides (BMI) and unsaturated polyesters
formaldehyde condensate resins such as with urea, melamine or phenols
cyanate resins
isocyanate resins
functionalised polyesters, polyamides or polyimides an mixture of two or more of these.

If an epoxy thermoset precursor is present it typically has 1 to 4 epoxy groups per molecule or is a corresponding hydroxy ether after advancement or incomplete cure. Typically it is a mono or poly-glycidyl derivative of one or more of:
aromatic diamines
aromatic monoprimary amines
aminophenols
polyhydric phenols
monomeric polyhydric alcohols
monomeric polycarboxylic acids

Examples are the following, which are liquids at ambient temperature:.
tetraglycidyl diamino diphenylmethane eg "MY 721" solid by Ciba-Geigy, viscosity 10-20 Pa s at 50|C
triglycidyl derivative of p-aminophenol (eg "MY 0510" sold by Ciba-Geigy), viscosity 0.55-0.85 Pa s at 25|C;
diglycidyl ether of 2,2-bis (4,4′-dihydroxyphenyl) propane (eg "Epikote 828" sold by Shell);
epoxy Novolak (eg "DEN 431" sold by Dow),
bisphenol F, which is in the low viscosity class;
Other epoxy resin precursors includes cycloaliphatics such 3′,4′-epoxycyclohexyl-3,4-epoxycyclohexane carboxylate (eg CY 179 sold by ciba-Geigy) and those in the "Bakelite" range of Union Carbide Corporation.

For such epoxy resins a curing agent ("hardener") can be used, which is preferably an amino compound having a molecular weight up to 500 per amino group, for example an aromatic amine or a guanidine derivative. Particular examples are 3,3′- and 4′,4′-diaminodiphenylsulphone, methylenedianiline and dicyandiamide. Such amine curing agents are additional to the amine-ended thermoplast: thus the matrix preferably contained epoxy-reactive amines of two types, one having a molecular weight up to 500 per amine group, the other having a molecular weight of at least 5000 per amine group and the total amine content being in the range 70 - 110% of the stoichiometric requirement of the epoxy resin precursor. Other

standard epoxy curing agents such as aliphatic diamines, amides, carboxylic acid anhydrides carboxylic acids and phenols can be used if desired.

If a catalyst is used, it is typically a Lewis acid, for example. boron trifluoride, conveniently as a derivative with an amine such as piperidine or methyl ethylamine. Alternatively it can be basic, for example an imidazole or amine.

If the thermoset resin component is a BMI resin, it is derived suitably from a precursor of general formula

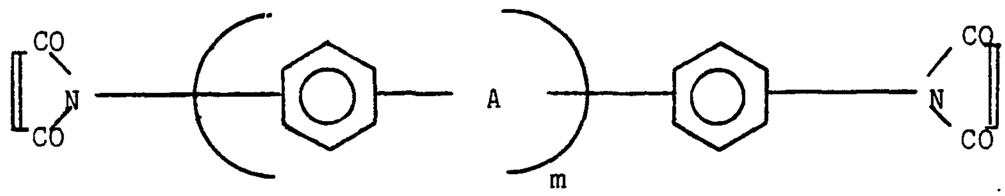

where m is 1 to 4 and A is as defined hereinbefore and the As differ when m exceeds 1.

The thermoset precursor and thermoplast are chosen preferably so that, at least after curing, each is present at least partly as a phase continuous in at least one dimension.

In a preferred structure these components become combined in a net-work in which each extends continuously through it. On a microscopic scale, one phase is believed to be in the form of a net in 2 or 3 dimensions, and the second phase fills the interstices between the threads of the net. It appears that the first phase is anisotropic on a microscopic scale; the second phase can be isotropic or anisotropic. The minimum dimension of each phase is typically at least 0.005, for example in the range 0.01 to 10, especially up to 5, microns. The maximum dimension of each phase is considerably greater for example L/D at least 10, and may be at least 10% of the geometric dimension of a mass of the composition. The two said phases can be the product of spinodal decomposition of liquid mixture containing the polyarylsulphone and the uncured or incompletely cured thermoset resin component. The morphology of the matrix of the structure may be evident when the matrix is flowable or plastic, but more usually shows only after curing.

The matrix may contain additives for example conventional toughening agents such as liquid rubbers having reactive groups, aggregates such as glass beads, rubber particles and rubber-coated glass beads, fillers such as polytetrafluoroethylene, graphite, boron nitride, mica, talc and vermiculite, pigments, nucleating agents, and stabilisers such as phosphates. The total of such materials and any fibrous reinforcing agent should be such that the matrix contains at least 20% by volume of the polysulphone/thermoset combination. The percentages of fibres and such other materials are calculated on the total composition after curing at up to 200|C.

Such additives can have been introduced as part of layer (a) or of layer (b) or of both or as one more more layers additional to (a) and (b). Further, layer (a) can contain a thermoplast in a minor proportion and/or layer (b) can contain a thermoset precursor in a minor proportion, by weight. The thermoset precursor in layer (a) can be the same as or different from that present in minor proportion in layer (b). The same applies to the thermoplast.

The structure can be for example in any one of the following forms:

1. a single thermoset precursor/reinforcing fibre layer with a thermoplast layer on one or both sides;

2. a small number of thermoset precursor/reinforcing fibre layers (say up to 4) each spaced from the next by a thermoplast layer;

3. a laminate, which may be to any required extent anisotropic according to the mutual angle of continuous fibres in successive layers, in which a large number of alternating layers of each kind adhere together.

Form 1 can be handled in a roll and fed continuously to shaping steps.

Form 2 can be shaped by compression or vacuum into eg profiled panels.

Form 3 can be the product of assembling structures 2 or 3.

The fibre can be organic, especially of stiff polymers such as poly paraphenylene terephthalamide, or inorganic. Among inorganic fibres glass fibres such a "E" or "S" can be used, or alumina, zirconia, silicon carbide, other compound ceramics or metals. A very suitable reinforcing fibre is carbon, especially as graphite. Organic or carbon fibre is preferably unsized or are sized with a material that is compatible with the composition according to the invention, in the sense of being soluble in the liquid precursor composition without adverse reaction or of bonding both to the fibre and to the thermoset/thermoplastic composition according to the invention. In particular carbon or graphite fibres that are unsized or are sized with epoxy

resin precursor or thermoplast such as polyarylsulphone can be used. Inorganic fibre preferably is sized with a material that bonds both to the fibre and to the polymer composition; examples are the organo-silane coupling agents applied to glass fibre.

In another form of the invention the structure is provided as pieces each containing substantially parallel continuous fibre. The pieces are typically 2-100, especially 5-30 mm in the direction of the fibre within them.

The matrix may include auxiliaries such as hardeners, or curing catalysts, which can have been introduced into the material of either or both layers before layer formation or can have been applied to either or both layers by for example spraying or dusting.

The invention provides a method of making the structure by bringing together:

(a) at least one uncured or partly cured thermoset resin precursor;

(b) at least one amorphous thermoplast;

(c) reinforcing fibres: and preferably causing at least incipient mixing of (a) and (b) in contact with (c).

The three can be brought together in any order. Conveniently (a) and (c) are brought together first, since the thermoset precursor can have a low viscosity and thus be applied to continuous fibres with good wetting. However, a wide variety of thermoplasts can be easily applied to fibres by the method of our co-pending EP-A56703, 102158 and 102159, and hence it is practicable to bring (b) and (c) together first. In either event the remaining component can be introduced by spraying its solution or by laying-on as a film. If (a) and (c) are brought together first, layer (b) can be applied as a fine powder.

The layer of fibres can be for example a woven or unwoven cloth or a felt. Preferably it is continuous, especially a collimated web or tow of fibres. Very suitably the method is performed by passing continuous fibre through a bath of one of the matrix components, optionally over a spreader or doctor, optionally through a heating or drying stage, then through a bath of the other matrix component and like optional steps.

The method can include steps of introducing (further) auxiliaries such as hardeners and/or curing catalysts for the thermoset resin, possibly by previous additional to the thermoset layer or as a solid powder.

After the above steps the structure can be rolled up and stored until required (if few layers are present); or can be cut into short lengths for use as moulding feed; or can be laminated and shaped. It can be part-cured by moderate heating if desired.

The invention provides a shaped article made of a matrix of thermoset resin and thermoplast in mutual combination and reinforced by fibres lying in parallel planes, characterised by being the product of curing a structure as hereinbefore defined. More particularly, the article is characterised by a gradation of matrix composition from the surface of the fibres to the between-fibre region remote from that surface, but with less than 5% by volume of thermoplast free of thermoset.

Production of such a shaped article by shaping the structure and curing it constitutes a further feature of the invention. Curing is effected typically by heating at a temperature in the range 180-200°C.

## Examples

The following thermoplast films were used:

1. Polyethersulphone consisting of the repeating unit -0-Ph-$SO_2$-Ph-having RV 0.5 and having OH end groups: thickness 5µ;

2. Polyethersulphone consisting of the repeating unit -0-Ph-$SO_2$-Ph-having RV 0.5 and having OH end groups: thickness 12µ;;

3. Polyethersulphone consisting of the repeating unit -0-Ph-$SO_2$-Ph-having RV 0.5 and having OH end groups: thickness 18µ;

4. Polyethersulphone consisting of units -0-Ph-0-Ph-$SO_2$-Ph- and -0-Ph-$SO_2$-Ph-0-Ph-$SO_2$-Ph in the molar ratio 60:40 and having 75% by moles of meta-aminophenoxy end groups, molecular weight 30000, thickness 12µ.

5. Polyethersulphone consisting of same units as 4, but molecular weight 45000, same thickness.

Each of the above films was made as follows. The polymer was dissolved in 85/15 v/v methylene chloride/ methanol at a concentration of 300g/l. A small volume of the solution was poured on to one end of an A4 sheet of polyethyleneterephthalate supported on a synthetic rubber impression bed, then drawn out into a uniform coating by means of a wire-wound rod.

The coating was dried and detached from the foil. Different wire-wound rods were used according to the film thickness required.

The plastics structure was made by laying-up unidirectionally 24 plies of an epoxy novolak impregnated carbon fibre ('Hercules IM6') containing 62% v/v of fibre and with 4,4′-diamino diphenylsulphone as hardener, each successive ply separated from it neighbour by one ply of one of the above films. The epoxy novolak and the thermoplast were mutually soluble. After each film was applied, it was pressed down by means of a warm hand-held smoothing iron, thus producing a coherent but slightly, if at all, cured structure. The proportion of thermoplast as a weight percentage of the prepreg is shown as % TP in the Table below.

For this test the preparation of the structure was not carried as a separate operation, but was followed immediately by curing at 176|C in an autoclave at 6.5 bar for 2h.

The cured structures were tested as follows:

Interlaminar fracture toughness $G_{1c}$ by double cantilever beam;

Short beam shear strength SBSS by ASTM-D-2344.

Results for structures 1-5 and for a control (epoxy-impregnated carbon fibre laminated without thermoplast layer) are shown in the Table

TABLE

| Sample No | %TP | $G_{1c}$ $KJm^{-2}$ | SBSS MPa |
|---|---|---|---|
| Control | 0 | 0.68 | 93.57 |
| 1 | 3.7 | 0.69 | 97.89 |
| 2 | 7.8 | 0.83 | 90.37 |
| 3 | 11.5 | 0.75 | 88.59 |
| 4 | 7.8 | 0.509 | 89.20 |
| 5 | 7.8 | 0.50 | 89.40 |

Examination of samples by Scanning Electron Microscopy showed the following:

(a) a polished etched specimen of 4 showed a coarse co-continuous morphology in the interlaminar region, evidently resulting from diffusion of epoxy resin precursor into the thermoplast, then spinodal re-precipitation; there is no distinct interface between the thermoplast and the epoxy layers, but only a gradual change of morphology.

(b) a polished etched specimen of 5 was similar, but the phase size of the co-continuous material was larger.

(c) a polished etched specimen of 3 showed a very fine co-continuous morphology.

## Claims

1. A composite structure comprising:

(a) at least one layer comprising at least one uncured or partly cured thermoset resin precursor;

(b) in contact therewith, at least one layer comprising at least one amorphous thermoplast, said precursor and said amorphous thermoplast having mutual solubility at a temperature between ambient and thermoset cure temperature; and

(c) reinforcing fibre present in either or both of said layers and/or between them.

2. A structure according to claim 1 in which the relative thicknesses of layers (a) and (b) are such that, on curing or further curing, layer (b) merges sufficiently into layer (a) to leave distinguishable thermoplast under 5% of total initial thickness.

3. A structure according to any one of the preceding claims in which the thermoplast is a polyarylether containing sulphone groups in its chain as ether-linked repeating units of formula $(Ph\ SO_2\ Ph)_n$ where n is 1 or 2 and may be fractional and Ph is paraphenylene.

4. A structure according to claim 3 in which the thermoplast contains also ether-linked units $(Ph)_a$, where a is 1 to 3 and can be fractional and groups Ph are (when a exceeds 1) linked linearly through a single chemical bond.

5. A structure according to claim 3 or claim 4 in which the thermoplast contains end groups and/or pendant groups of formula $-A'-Y$ where $A'$ is a divalent aromatic hydrocarbon group and Y is a group reactive with the thermoset precursor.

6. A structure according to any one of the preceding claims in which the thermoset resin is an epoxy

resin precursor having 1 to 4 epoxy groups in its molecule.

7. A method of making a structure according to any one of the preceding claims which comprises bringing together

(a) at least one uncured or partly cured thermoset resin precursor;

(b) at least one amorphous thermoplast;

(c) reinforcing fibres:

and causing at least incipient mixing of (a) and (b) in contact with (c).

8. A method of making a shaped article which comprises shaping a structure according to any one of claims 1 to 7 or as made by the method of claim 8 and curing the thermoset resin thereof.

9. A shaped article made of a matrix of a cured thermoset resin and a thermoplast in mutual combination and reinforced by fibres lying in parallel planes, characterised by a gradation of matrix composition from the surface of the fibres to the between-fibre region remote from that surface, but with less than 5% by volume of thermoplast free of thermoset.